# EUROPEAN PATENT SPECIFICATION

(11) **EP 4 151 513 B1**
(45) Date of publication and mention of the grant of the patent: **30.10.2024**
(21) Application number: 22181282.9
(22) Date of filing: 27.06.2022
(51) Int. Cl.: B62M 6/65, B62K 25/02

(54) **MOTOR DEVICE FOR AN ELECTRIC BICYCLE**
MOTORVORRICHTUNG FÜR EIN ELEKTRISCHES FAHRRAD
DISPOSITIF DE MOTEUR POUR BICYCLETTE ÉLECTRIQUE

(30) Priority: 16.09.2021 EP 21197079
(43) Date of publication of application: 22.03.2023
(73) Proprietor: MAHLE International GmbH, 70376 Stuttgart (DE)
(72) Inventor: ANTON, Ivan, Valladolid (ES); DE LA SERNA GONZALEZ, Marco Antonio, 34005 Palencia (ES); FRANCO REVILLA, Jose Vicente, 34810 Matalbaniega (ES); GARCIA, Gonzalo, 14012 Cordoba (ES); GONZALEZ DE JUAN, Carlos, 47006 Valladolid (ES); JUMBERT, Jaume, 25430 Juneda (ES); PEREZ, Sergio, 03005 Alicante (ES)
(74) Representative: BRP Renaud & Partner mbB Rechtsanwälte Patentanwälte Steuerberater

(56) References cited:
- WO-A1-2010/091524
- WO-A1-2011/111299

## Description

The invention relates to a motor device for an electric bicycle according to the generic term of claim 1. The invention further relates to a connector unit for the motor device and an electric bicycle with the motor device.

An electric bicycle is known, for example, from JP 2001071983 A and WO 2009/027683 A1. The electric bicycle typically contains an electric motor and a battery. The battery and the electric motor are electrically connected to each other via a connector unit, wherein the connector unit usually comprises a connector on the battery side and a connector on the electric motor side. The connector on the battery side is connected to the battery and the connector on the electric motor side is connected to the electric motor each via a cable. When mounting or dismounting a rear wheel of the electric bicycle carrying the electric motor, the connection between the battery and the electric motor have always to be established or released. As a result, mounting or dismounting the rear wheel takes a long time. Moreover, if the connector unit is not loosened when removing the rear wheel, the connector unit can be damaged. Furthermore, the connector must be positioned on the bicycle in such a way that it is always accessible for connecting the battery and the electric motor.

WO 2011/111299 A1**,** which shows the preamble of claim 1, discloses an electric bicycle having a motor drive unit, a control unit, and a battery. The motor drive unit is incorporated in the hub of a front wheel and the control unit and the battery are positioned on the frame of the electric bicycle. The motor drive unit is electrically connected to the control unit and the battery via flexible harnesses.

It is therefore the object of the invention to provide an improved or at least alternative embodiment for an electric bicycle of the generic type, a motor device for the electric bicycle and a connector unit for the motor device, in which the described disadvantages are overcome.

This object is reached according to the invention by the object of the independent claims. Advantageous embodiments are the subject of the dependent claims.

A motor device is provided for an electric bicycle. The motor device contains an electric motor having a rotation axis and a connector unit. The motor device further contains a first connector unit and a second connector unit. The first connector unit contains a first motor connector and a first connecting part that surrounds the first motor connector regionally and outwardly. The first motor connector and the first connecting part are rigidly fixed to each other. The first connector unit is fixedly mounted i.e. rigidly fixed on the electric motor and is electrically conductively connected to the electric motor via the first motor connector. The second connector unit comprises a second motor connector and a second connecting part. An electrical conductive connection can be established and released directly between the first motor connector and the second motor connector. According to the invention, a form-fitted connection can be established and released between the first connecting part and the second connecting part transversely to the axis of rotation. When establishing and releasing the form-fitted connection between the connecting parts, the electrical conductive connection between the motor connectors can also be established and released.

In the present invention, the terms "axial" and "radial" always refer to the axis of rotation of the electric motor.

The electric motor can contain a stator and a rotor and the first connector unit can then be fixedly mounted i.e. rigidly fixed to the stator of the electric motor. The first motor connector and/or the first connecting part can be fixedly mounted i.e. rigidly fixed to the electric motor. The second motor connector and/or the second connecting part can be fixedly mounted i.e. rigidly fixed to each other in the second connector unit. Advantageously, the second connector unit can be designed to be fixedly mounted i.e. rigidly fixed to a dropout of the electric bicycle preferably via a carrier and the electric motor can be designed to be fixedly mounted i.e. rigidly fixed to a rear wheel of the electric bicycle. The first motor connector of the first connector unit mounted on the electric motor and the second motor connector of the second connector unit can be arranged in such a way that, if the rear wheel is positioned on the dropout for mounting a thru axle of the rear wheel, the form-fitted and electrical conductive connection between the first connector unit mounted on the electric motor and the second connector unit is established. There, the two motor connectors are directly connected to each other in an electrical conductive manner. In other words, the two motor connectors are plugged into each other and thereby electrically connected with each other. For this purpose, the two motor connectors are suitably formed to correspond with one another i.e. to be complementary to one another i.e. to be plugged into one another. Thus, when the rear wheel is positioned for mounting the thru axle, the form-fitted and electrical conductive connection between the first connector unit mounted to the electric motor and the second connector unit can be automatically established. This can reduce the time required to mount and dismount the rear wheel of the electric bicycle. In addition, the risk of damage of the second connector unit can be reduced.

Advantageously, the motor device can comprise a form-fitting unit having a first form-fitting element and having a second form-fitting element. The first form-fitting element can be formed on the first connecting part, and the second form-fitting element can be formed on the second connecting part. Furthermore, the first or second form-fitting element can be insertable into the second or first form-fitting element transversely to the axis of rotation and thereby the form-fitted connection between the connecting parts can be established. As a result, the first connecting part can be guided transversely to the axis of rotation on the second connecting part or vice versa in a simplified manner, thereby simplifying the establishing and releasing of the electrical conductive connection between the first connector unit mounted on the electric motor and the second connector unit. The form-fitted connection acts parallel to the axis of rotation of the electric motor, so that the two connecting parts cannot be detached axially from each other.

The first form-fitting element can be formed by two first guide rails spaced apart from one another and aligned transversely to the axis of rotation, and the second form-fitting element can be formed by two second guide rails spaced apart from one another and aligned transversely to the axis of rotation. The first guide rails and the second guide rails can be formed complementary to each other. Furthermore, the first guide rails and the second guide rails can be displaceable into one another transversely to the axis of rotation and fixedly connectable to one another parallel to the axis of rotation. In addition, the two first guide rails and the two second guide rails can each be aligned non-parallel to each other and approach each other radially inwardly towards the axis of rotation. In this embodiment of the form-fitting unit, the first connecting part can be guided on the second connecting part or vice versa in a particularly secure and simplified manner.

In an advantageous embodiment, it can be provided that the second connector unit contains a carrier. The carrier surrounds the second connecting part and the second motor connector at least in regions towards the electric motor. Thus, the carrier can protect the second connecting part and the second motor connector from the outside. Advantageously, the carrier can be fixedly connected i.e. rigidly fixed to the electric bicycle or can be integrated into the electric bicycle or can be integral with or can be formed from the same piece of material with a dropout of the electric bicycle. The second connecting part can be formed on the carrier or can be fixed to the carrier in a form-fitted and/or force-fitted and/or material-bonded manner. In addition, the second motor connector can be fixedly connected i.e. rigidly fixed to the carrier in a form-fitted and/or force-fitted and/or material-bonded manner.

In an advantageous embodiment of the motor device, the motor device can include a thru axle. In this case, the thru axle defines the axis of rotation of the electric motor and extends through the electric motor and the second connector unit. It will be understood that the thru axle also extends through a dropout of the electric bicycle, thereby securing the rear wheel carrying the electric motor to the dropout. In addition, the thru axle can also fix the first connector unit mounted on the electric motor and the second connector unit to each other transversely to the axis of rotation so that the form-fitted connection between the connecting parts and the electrical conductive connection between the motor connectors are non-detachable, when the thru axle is mounted in the rear wheel and the dropout i.e. when the rear wheel is mounted on the dropout. In individual components of the second connector unit - for example in the carrier and/or in the second connecting part - and of the first connector unit mounted on the electric motor - for example in the second connecting part, - axially corresponding openings for the thru axle can be formed.

The second connector unit can further comprise a second battery connector for connecting the second connector unit to a first battery connector of a battery of the electric bicycle. The first battery connector can thereby be electrically conductively connected to the second motor connector via a cable. The two battery connectors are formed to correspond with each other i.e. to be plugged into each other. Via the first connector unit and second connector unit, the battery can be electrically conductively connected to the electric motor.

The invention also relates to a connector unit arrangement for the motor device described above and having the first connector unit and the second connector unit. The connector unit arrangement is formed in such a way that a form-fitted connection can be established and released between the second connector unit and the first connector unit for the electric motor transversely to the axis of rotation. When establishing and releasing the form-fitted connection, an electrical conductive connection can be established and released between the second connector unit and the first connector unit for the electric motor. The first connector unit can thereby be provided for fixed connection i.e. rigid fixing to the electric motor. The second connector unit can thereby be provided for fixed connection i.e. rigid fixing to the electric bicycle, in particular to a dropout of the electric bicycle, in particular to a dropout of the electric bicycle via a carrier. In order to avoid repetition, reference is made at this point to the above explanations.

The invention also relates to an electric bicycle. Here, the electric bicycle contains a motor device described above and having the electric motor, the first connector unit, and the second connector unit. In addition, the electric bicycle contains a rear wheel, a dropout supporting the rear wheel, and a battery. According to purpose, the electric bicycle also can contain a front wheel. The electric motor with the first connector unit is fixedly connected i.e. rigidly fixed to the rear wheel and the second connector unit is fixedly connected i.e. rigidly fixed to the dropout. The electric motor is electrically connected to the battery via the first connector unit and the second connector unit. Advantageously, the second connector unit can contain a carrier which surrounds or partially surrounds the second connecting part and the second motor connector at least in regions towards the electric motor. The carrier can be fixedly connected i.e. rigidly fixed to or is integrally formed with the dropout. The dropout can be integral with a frame of the electric bicycle. In order to avoid repetition, reference is made here to the above explanations.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, in each case schematically
- Fig. 1: a partial view of an electric bicycle according to the invention with a motor device according to the invention;
- Figs. 2 and 3: partial exploded views of the electric bicycle with the motor device according to the invention;
- Fig. 4: a view of a connector unit for the motor device according to the invention;
- Fig. 5: a view of a motor of the motor device according to the invention;
- Fig. 6: a partial view of the electric bicycle according to the invention with a dismounted motor of the motor device;
- Fig. 7: a partial sectional view of the electric bicycle according to the invention with the motor device according to the invention.

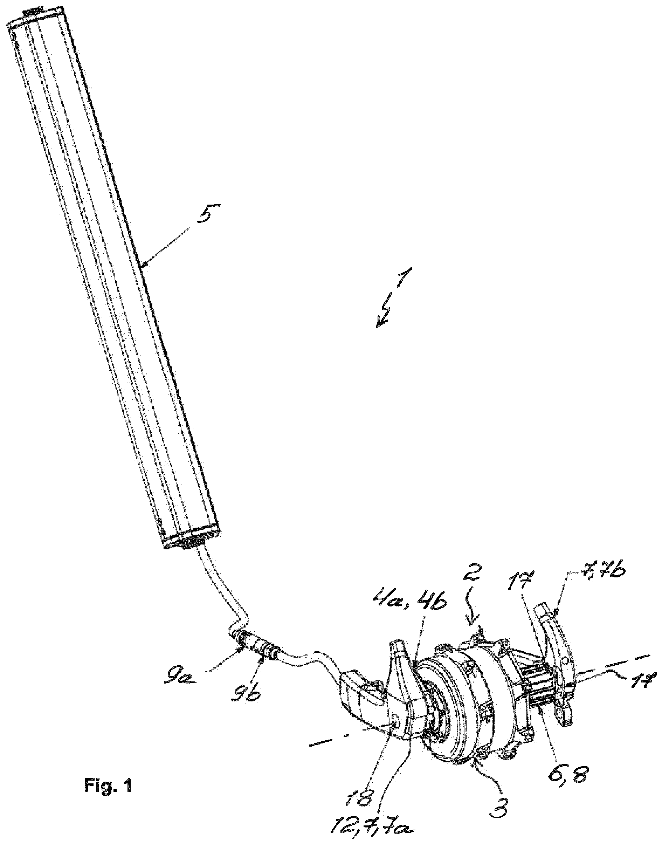

Fig. 1 shows a partial view of an electric bicycle 1 according to the invention. The electric bicycle 1 contains a motor device 2 with a motor 3 and with a first connector unit 4a and a second connector unit 4b, and further contains a battery 5, a rear wheel 6 and a dropout 7. It will be understood that the electric bicycle 1 also contains other components which are not shown here for clarity. The electric motor 3 provides an axis of rotation RA in the motor device 2. The electric motor 3 is fixedly connected i.e. rigidly fixed to the rear wheel 6 i.e. a hub 8 of the rear wheel 6 is formed by the electric motor 3. The rear wheel 6 and/or the electric motor 3 i.e. a rotor of the electric motor 3 is rotatably connected to the dropout 7, and the second connector unit 4b is attached i.e. fixedly connected i.e. rigidly fixed to a first dropout half 7a of the dropout 7. The first connector unit 4a is fixedly connected i.e. rigidly fixed to the electric motor 3. The battery 5 is arranged in the electric bicycle 1 spaced apart from the rear wheel 6 and from the motor device 2.

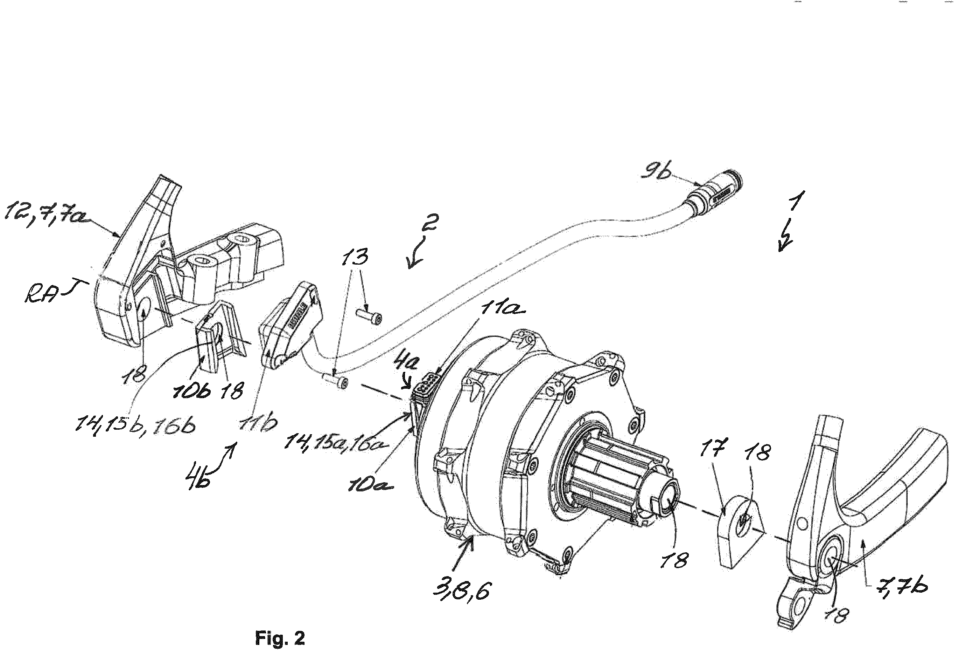

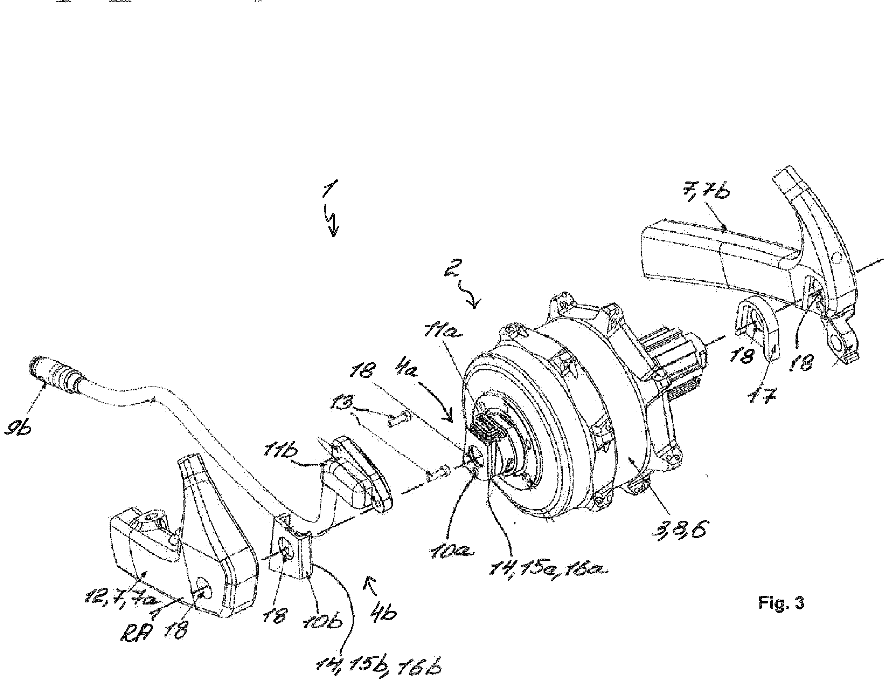

The battery 5 is electrically connected to the electric motor 3 via the second connector unit 4b. The battery 5 contains a first battery connector 9a and the second connector unit 4b contains a second battery connector 9b. To establish and release an electrical conductive connection between the battery 5 and the second connector unit 4b, a plug connection is established and released between the two battery connectors 9a and 9b. Further details of the structure of the motor device 2, the first connector unit 4a, and the second connector unit 4b will be explained in more detail below with reference to Fig. 2 and Fig. 3.

Fig. 2 and Fig. 3 show partial exploded views of the electric bicycle 1 according to the invention with the motor device 2 according to the invention. As can be seen here, the first connector unit 4a mounted on electric motor 3 comprises a first connecting part 10a and a first motor connector 11a. In this regard, the first connecting part 10a surrounds and protects the first motor connector 11a. The first connecting part 10a and the first motor connector 11a are rigidly fixed to each other and to the electric motor 3 i.e. the stator of the electric motor 3. The motor connector 11a is further electrically conductively connected i.e. electrically conductively contacted i.e. wired to a control board or a PCB (PCB: Printed Circuit Board) of the electric motor 3.

The second connector unit 4b comprises a carrier 12, a second connecting part 10b and a second motor connector 11b. In this regard, the carrier 12 is integrally formed with a first dropout half 7a of the dropout 7 i.e. is formed by the first dropout half 7a of the dropout 7. The second connecting part 10b is fixedly connected i.e. rigidly fixed to the carrier 12, and the second motor connector 11b is screwed and, in this way, rigidly fixed to the carrier 12 by means of two screws 13. In this way, the second connecting part 10b and the second motor connector 11b are fixedly connected i.e. rigidly fixed to each other and to the carrier 12. The motor connectors 11a and 11b are engageable with each other, whereby an electrical conductive connection can be established between the first connector unit 4a mounted on the electric motor 3 and the second connector unit 4b. When the second connector unit 4b is electrically conductively connected to the battery 5 via the battery connector 9b, the electric motor 3 is thereby electrically conductively connected to the battery 5.

The motor device 2 further comprises a form-fitting unit 14 having a first form-fitting element 15a and having a second form-fitting element 15b. The first form-fitting element 15a is formed by two guide rails 16a, and the second form-fitting element 15b is formed by two guide rails 16b. The two guide rails 16a and 16b are spaced apart from each other and are aligned transversely to the axis of rotation RA. Moreover, the two guide rails 16a and 16b respectively approach radially inwardly. By means of the form-fitting unit 14, the first connecting part 10a and thereby the electric motor 3 can be guided in the second connecting part 10b and thereby on the second connector unit 4b transversely to the axis of rotation RA. Thereby, the guide rails 16a and 16b axially engage with each other and a form-fitted connection can be established and released between the first connector unit 4a mounted on the electric motor 3 and the second connector unit 4 mounted on the dropout 7 of the electric bicycle 1.

The motor connectors 11a and 11b are thereby arranged on the connecting parts 10a and 10b in such a way that, when the form-fitted connection between the connecting parts 10a and 10b is established and released, the electrical conductive connection between the motor connectors 11a and 11b can also be established and released. As a result, the electric motor 3 can be mounted on the second connector unit 4b i.e. on the dropout 7 i.e. on the electric bicycle 1 via the first connector unit 4a in a simplified manner.

In Fig. 2 and Fig. 3, a second dropout half 7b of the dropout 7 and a left hanger 17 can also be seen. Furthermore, a through opening 18 in the motor device 2 and in the dropout 7 can be seen, through which a thru axle of the rear wheel 6 - not shown here - can be guided.

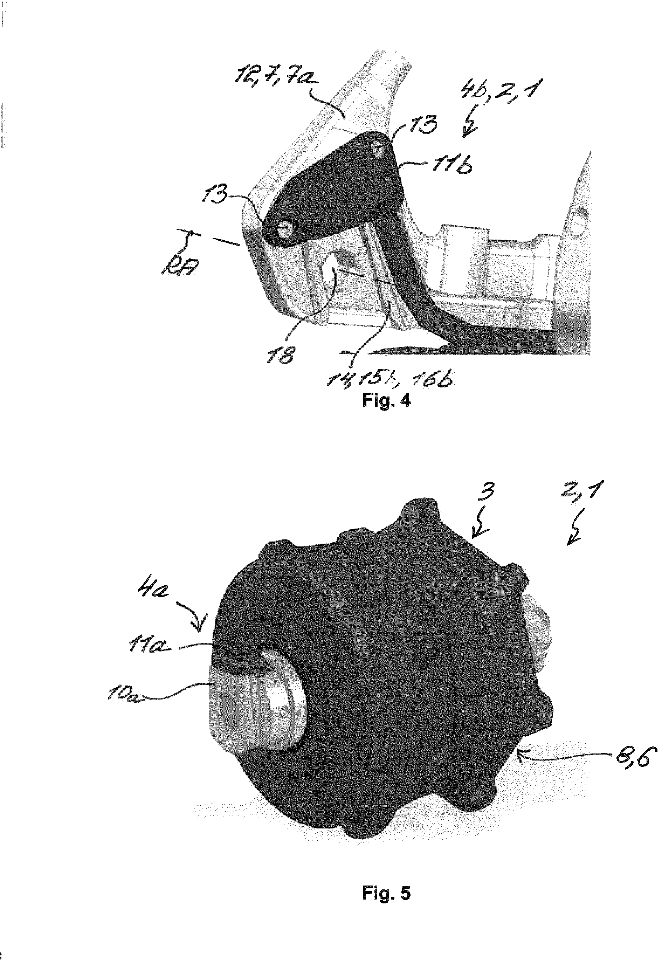

Fig. 4 shows a view of the second connector unit 4b for the motor device 2 according to the invention. Here, the motor connector 11b is fixedly mounted on the carrier 12 via the screws 13.

Fig. 5 shows a view of the electric motor 3 and the first connector unit 4a of the motor device 2 according to the invention. In Fig. 5, it can be seen well that the first connecting part 10a outwardly surrounds the motor connector 11a in regions and thereby protects it.

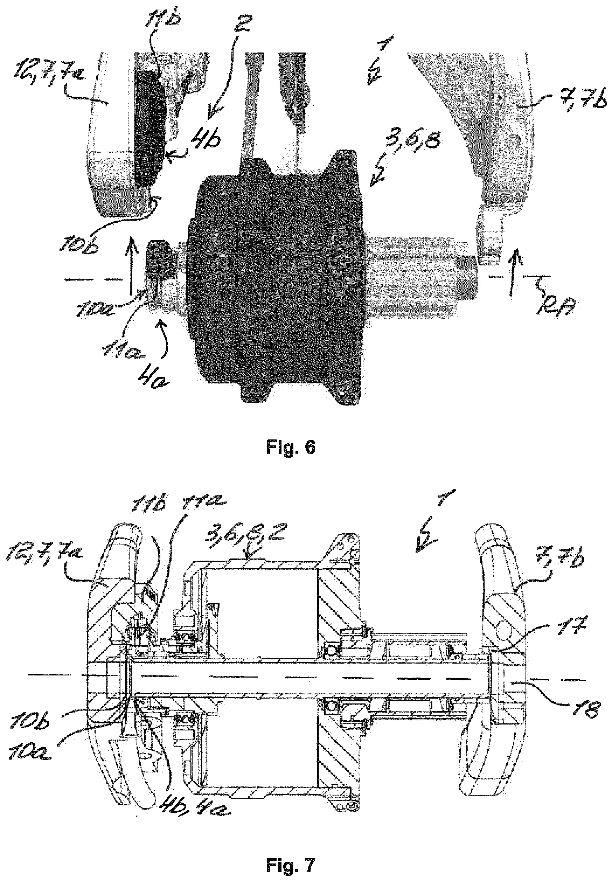

Fig. 6 shows a partial view of the electric bicycle 1 according to the invention with the electric motor 3 dismounted from the dropout 7. Here, if the electric motor 3 i.e. the rear wheel 6 with the integrated motor 3 is pushed in the direction of the arrows, the first connecting part 10a of the first connector unit 4a is guided on the second connecting part 10b of the second connector unit 4b in the direction of the arrows and the form-fitted connection between the first connector unit 4a mounted on the electric motor 3 and the second connector unit 4b mounted on the dropout 7 is established. At the same time, the motor connectors 11a and 11b are engaged with each other, thereby establishing the electrical conductive connection between the electric motor 3 and the second connector unit 4b via the first connector unit 4a.

Fig. 7 shows a partial sectional view of the electric bicycle 1 according to the invention with the motor device 2 according to the invention. Here, the electric motor 3 is mounted on the dropout 7 and the form-fitted and electrical conductive connection between the first connector unit 4a mounted on the electric motor 3 and the second connector unit 4b mounted on the dropout 7 is already established. Furthermore, in Fig. 7, the through-opening 18 for passing the thru axle of the rear wheel 6 - not shown here - can be seen particularly well. The axis of rotation RA of the electric motor 3 is defined or predetermined by the thru axle of the rear wheel 6.

### Reference list

- 1.: Electric bicycle
- 2.: Motor device
- 3.: Electric motor
- 4a.: First connector unit
- 4b.: Second connector unit
- 5.: Battery
- 6.: Rear wheel
- 7.: Dropout
- 7a/7b.: First/second dropout half
- 8.: Hub
- 9a/9b.: First/second battery connector
- 10a/10b.: First/second connecting part
- 11a/11b.: First/second motor connector
- 12.: Carrier
- 13.: Screw
- 14.: Form-fitting unit
- 15a/15b.: First/second form-fitting element
- 16a/16b.: First/second guide rails
- 17.: Left Hanger
- 18.: Hole

## Claims

1. Motor device (2) for an electric bicycle (1),
- wherein the motor device (2) comprises an electric motor (3) having an axis of rotation (RA),
- wherein the motor device (2) comprises a first connector unit (4a) having a first motor connector (11a) and a first connecting part (10a) which surrounds the first motor connector (11a) regionally and outwardly,
- wherein the first motor connector (11a) and the first connecting part (10a) are rigidly fixed to each other,
- wherein the first connector unit (4a) is electrically conductively connected to the electric motor (3) via the first motor connector (11a),
- wherein the motor device (2) comprises a second connector unit (4b) having a second motor connector (11b) and having a second connecting part (10b),
- wherein an electrical conductive connection can be established and released directly between the first motor connector (11a) and the second motor connector (11b),
- wherein between the first connecting part (10a) and the second connecting part (10b) a form-fitted connection transversely to the axis of rotation (RA) can be established and released, and
- wherein, when the form-fitted connection between the connecting parts (10a, 10b) is established and released, the electrical conductive connection between the motor connectors (11a, 11b) can be established and released, **characterized in that** the first connector unit (4a) is rigidly fixed to the electric motor (3).

2. Motor device according to claim 1,
**characterized in**
- **that** the first motor connector (11a) and/or the first connecting part (10a) are rigidly fixed to the electric motor (3); and/or
- **that** the second motor connector (11b) and/or the second connecting part (10b) are rigidly fixed to each other in the second connector unit (4b).

3. Motor device according to claim 1 or 2,
**characterized in**
- **that** the second connector unit (4b) is designed to be rigidly fixed to a dropout (7) of the electric bicycle (1) preferably by a carrier (12), and/or
- **that** the electric motor (3) is designed to be rigidly fixed to a rear wheel (6) of the electric bicycle (1).

4. Motor device according to any one of the preceding claims,
**characterized in**
- **that** the motor device (2) contains a form-fitting unit (14) with a first form-fitting element (15a) and with a second form-fitting element (15b),
- **that** the first form-fitting element (15a) is formed on the first connecting part (10a) and the second form-fitting element (15b) is formed on the second connecting part (10b), and
- **that** the first or second form-fitting element (15a, 15b) is insertable into the second or first form-fitting element (15b, 15a) transversely to the axis of rotation (RA) and thereby the form-fitting connection between the connecting parts (10a, 10b) can be established.

5. Motor device according to claim 4,
**characterized in**
- **that** the first form-fitting element (15a) is formed by two first guide rails (16a) which are spaced apart from one another and aligned transversely to the axis of rotation (RA),
- **that** the second form-fitting element (15b) is formed by two second guide rails (16b) spaced apart from each other and aligned transversely to the axis of rotation (RA),
- **that** the first guide rails (16a) and the second guide rails (16b) are formed complementary to each other, and
- **that** the first guide rails (16a) and the second guide rails (16b) are displaceable into each other transversely to the axis of rotation (RA) and are fixedly connectable to each other parallel to the axis of rotation (RA).

6. Motor device according to claim 5,
**characterized in**
**that** the two first guide rails (16a) and the two second guide rails (16b) are each aligned non-parallel to one another and approach one another radially inwards towards the axis of rotation (RA).

7. Motor device according to any one of the preceding claims,
**characterized in**
**that** the second connector unit (4b) contains a carrier (12) which surrounds the second connecting part (10b) and the second motor connector (11b) at least in regions towards the electric motor (3).

8. Motor device according to claim 7,
**characterized in**
**that** the second connecting part (10b) is formed on the carrier (12) or is firmly connected to the carrier (12) in a form-fitting and/or force-fitting and/or material-bonded manner.

9. Motor device according to claim 7 or 8,
**characterized in**
**that** the second motor connector (11b) is firmly connected to the carrier (12) in a form-fitting and/or force-fitting and/or material-bonded manner.

10. Motor device according to any one of the preceding claims,
**characterized in**
**that** the motor device (2) contains a thru axle, the thru axle defining the axis of rotation (RA) of the electric motor (3) and extending through the electric motor (3) and the second connector unit (4b).

11. Motor device according to any one of the preceding claims,
**characterized in**
- **that** the second connector unit (4b) contains a second battery connector (9b) for connecting the second connector unit (4b) to a first battery connector (9a) of a battery (5) of the electric bicycle (1), and
- **that** the second battery connector (9b) is electrically conductively connected to the second motor connector (11b) via a cable.

12. Connector unit arrangement with the motor device (2) according to one of the preceding claims having the first connector unit (4a) and the second connector unit (4b) being formed in such a way,
- that a form-fitted connection can be established and released transversely to the axis of rotation (RA) between the second connector unit (4b) and the first connector unit (4a) for the electric motor (3), and
- that, when the form-fitted connection is produced and released, an electrical conductive connection can be established and released between the second connector unit (4b) and the first connector unit (4a) for the electric motor (3).

13. Electric bicycle (1),
- wherein the electric bicycle (1) comprises the motor device (2) according to any one of claims 1 to 11,
- wherein the electric bicycle (1) comprises a rear wheel (6), a dropout (7) supporting the rear wheel (6), and a battery (5),
- wherein the electric motor (3) with the first connector unit (4a) is fixed to the rear wheel (6) and the second connector unit (4b) is fixed to the dropout (7), and
- wherein the electric motor (3) is electrically conductively connected to the battery (5) via the second connector unit (4b).

14. Electric bicycle according to claim 13,
**characterized in**
- **that** the second connector unit (4b) contains a carrier (12) which surrounds or partially surrounds the second connecting part (10b) and the second motor connector (11b) at least in regions towards the electric motor (3), and
- **that** the carrier (12) is rigidly fixed to or is integrally formed with the dropout (7).

15. Electric bicycle according to claim 14,
**characterized in**
**that** the dropout (7) is integral with a frame of the electric bicycle (1).

## Patentansprüche

1. Motorvorrichtung (2) für ein elektrisches Fahrrad (1),
- wobei die Motorvorrichtung (2) einen Elektromotor (3) umfasst, der eine Rotationsachse (RA) aufweist,
- wobei die Motorvorrichtung (2) eine erste Verbindereinheit (4a) umfasst, die einen ersten Motorverbinder (11a) und ein erstes Verbindungsteil (10a) aufweist, das den ersten Motorverbinder (11a) bereichsweise und nach außen hin umgibt,
- wobei der erste Motorverbinder (11a) und das erste Verbindungsteil (10a) starr aneinander befestigt sind,
- wobei die erste Verbindereinheit (4a) über den ersten Motorverbinder (11a) elektrisch leitend mit dem Elektromotor (3) verbunden ist,
- wobei die Motorvorrichtung (2) eine zweite Verbindereinheit (4b) umfasst, die einen zweiten Motorverbinder (11b) aufweist und ein zweites Verbindungsteil (10b) aufweist,
- wobei eine leitende elektrische Verbindung direkt zwischen dem ersten Motorverbinder (11a) und dem zweiten Motorverbinder (11b) aufgebaut und gelöst werden kann,
- wobei zwischen dem ersten Verbindungsteil (10a) und dem zweiten Verbindungsteil (10b) eine formschlüssige Verbindung quer zu der Rotationsachse (RA) aufgebaut und gelöst werden kann, und
- wobei, wenn die formschlüssige Verbindung zwischen den Verbindungsteilen (10a, 10b) aufgebaut oder gelöst ist, die leitende elektrische Verbindung zwischen den Motorverbindern (11a, 11b) aufgebaut und gelöst werden kann, **dadurch gekennzeichnet, dass** die erste Verbindereinheit (4a) starr am Elektromotor (3) befestigt ist.

2. Motorvorrichtung nach Anspruch 1,
**dadurch gekennzeichnet,**
**dass** der erste Motorverbinder (11a) und/oder das erste Verbindungsteil (10a) starr an dem Elektromotor (3) befestigt ist/sind; und/oder
- **dass** der zweite Motorverbinder (11b) und/oder das zweite Verbindungsteil (10b) in der zweiten Verbindereinheit (4b) starr aneinander befestigt ist/sind.

3. Motorvorrichtung nach Anspruch 1 oder 2,
**dadurch gekennzeichnet,**
**dass** die zweite Verbindereinheit (4b) gestaltet ist, um vorzugsweise durch einen Träger (12) starr an einem Ausfallende (7) des elektrischen Fahrrads (1) befestigt zu werden, und/oder
- **dass** der Elektromotor (3) gestaltet ist, um starr an einem Hinterrad (6) des elektrischen Fahrrads (1) befestigt zu werden.

4. Motorvorrichtung nach einem der vorstehenden Ansprüche,
**dadurch gekennzeichnet,**
- **dass** die Motorvorrichtung (2) eine erste Formschlusseinheit (14) mit einem ersten Formschlusselement (15a) und mit einem zweiten Formschlusselement (15b) enthält,
**dass** das erste Formschlusselement (15a) am ersten Verbindungsteil (10a) gebildet ist und das zweite Formschlusselement (15b) am zweiten Verbindungsteil (10b) gebildet ist, und
- **dass** das erste oder zweite Formschlusselement (15a, 15b) quer zu der Rotationsachse (RA) in das zweite oder erste Formschlusselement (15b, 15a) einführbar ist, und dadurch die Formschlussverbindung zwischen den Verbindungsteilen (10a, 10b) aufgebaut werden kann.

5. Motorvorrichtung nach Anspruch 4,
**dadurch gekennzeichnet,**
- **dass** das erste Formschlusselement (15a) durch zwei erste Führungsschienen (16a) gebildet wird, die voneinander beabstandet, und quer zur Rotationsachse (RA) ausgerichtet sind,
- **dass** das zweite Formschlusselement (15b) durch zwei zweite Führungsschienen (16b) gebildet wird, die voneinander beabstandet und quer zur Rotationsachse (RA) ausgerichtet sind,
- **dass** die ersten Führungsschienen (16a) und die zweiten Führungsschienen (16b) komplementär zueinander gebildet sind, und
- **dass** die ersten Führungsschienen (16a) und die zweiten Führungsschienen (16b) quer zu der Rotationsachse (RA) ineinander verschiebbar sind und parallel zu der Rotationsachse (RA) starr miteinander verbindbar sind.

6. Motorvorrichtung nach Anspruch 5,
**dadurch gekennzeichnet,**
**dass** die beiden ersten Führungsschienen (16a) und die beiden zweiten Führungsschienen (16b) jeweils nicht-parallel zueinander ausgerichtet sind und sich radial nach innen zur Rotationsachse (RA) hin einander annähern.

7. Motorvorrichtung nach einem der vorstehenden Ansprüche,
**dadurch gekennzeichnet,**
**dass** die zweite Verbindereinheit (4b) einen Träger (12) enthält, der das zweite Verbindungsteil (10b) und den zweiten Motorverbinder (11b) zumindest bereichsweise zum Elektromotor (3) hin umgibt.

8. Motorvorrichtung nach Anspruch 7,
**dadurch gekennzeichnet,**
**dass** das zweite Verbindungsteil (10b) am Träger (12) gebildet ist oder formschlüssig und/oder kraftschlüssig und/oder stoffschlüssig fest mit dem Träger (12) verbunden ist.

9. Motorvorrichtung nach Anspruch 7 oder 8,
**dadurch gekennzeichnet,**
**dass** der zweite Motorverbinder (11b) formschlüssig und/oder kraftschlüssig und/oder stoffschlüssig fest mit dem Träger (12) verbunden ist.

10. Motorvorrichtung nach einem der vorstehenden Ansprüche,
**dadurch gekennzeichnet,**
**dass** die Motorvorrichtung (2) eine Steckachse enthält, wobei die Steckachse die Rotationsachse (RA) des Elektromotors (3) definiert und sich durch den Elektromotor (3) und die zweite Verbindereinheit (4b) hindurch erstreckt.

11. Motorvorrichtung nach einem der vorstehenden Ansprüche,
**dadurch gekennzeichnet,**
- **dass** die zweite Verbindereinheit (4b) einen zweiten Batterieverbinder (9b) zum Verbinden der zweiten Verbindereinheit (4b) mit einem ersten Batterieverbinder (9a) einer Batterie (5) des elektrischen Fahrrads (1) enthält, und
- **dass** der zweite Batterieverbinder (9b) über ein Kabel elektrisch leitend mit dem zweiten Motorverbinder (11b) verbunden ist.

12. Verbindereinheitsanordnung mit der Motorvorrichtung (2) nach einem der vorstehenden Ansprüche, welche die erste Verbindereinheit (4a) und die zweite Verbindereinheit (4b) aufweist, die derart gebildet sind,
- dass zwischen der zweiten Verbindereinheit (4b) und der ersten Verbindereinheit (4a) für den Elektromotor (3) eine formschlüssige Verbindung quer zu der Rotationsachse (RA) aufgebaut und gelöst werden kann, und
- dass, wenn die formschlüssige Verbindung hergestellt und gelöst wird, eine leitende elektrische Verbindung zwischen der zweiten Verbindereinheit (4b) und der ersten Verbindereinheit (4a) für den Elektromotor (3) aufgebaut und gelöst werden kann.

13. Elektrisches Fahrrad (1),
- wobei das elektrische Fahrrad (1) die Motorvorrichtung (2) nach einem der Ansprüche 1 bis 11 umfasst,
- wobei das elektrische Fahrrad (1) ein Hinterrad (6), ein das Hinterrad (6) tragendes Ausfallende (7) und eine Batterie (5) umfasst,
- wobei der Elektromotor (3) mit der ersten Verbindereinheit (4a) am Hinterrad (6) befestigt ist und die zweite Verbindereinheit (4b) am Ausfallende (7) befestigt ist, und
- wobei der Elektromotor (3) über die zweite Verbindereinheit (4b) elektrisch leitend mit der Batterie (5) verbunden ist.

14. Elektrisches Fahrrad nach Anspruch 13,
**dadurch gekennzeichnet,**
- **dass** die zweite Verbindereinheit (4b) einen Träger (12) enthält, der das zweite Verbindungsteil (10b) und den zweiten Motorverbinder (11b) zumindest bereichsweise zum Elektromotor (3) hin umgibt oder teilweise umgibt, und
- **dass** der Träger (12) starr an dem Ausfallende (7) befestigt oder in einem Stück damit gebildet ist.

15. Elektrisches Fahrrad nach Anspruch 14,
**dadurch gekennzeichnet,**
**dass** das Ausfallende (7) in einem Stück mit einem Rahmen des elektrischen Fahrrads (1) ist.

## Revendications

1. Dispositif moteur (2) pour vélo électrique (1),
- dans lequel le dispositif moteur (2) comprend un moteur électrique (3) présentant un arbre rotatif (RA),
- dans lequel le dispositif moteur (2) comprend une première unité connecteur (4a) présentant un premier connecteur (11a) de moteur et une première partie de connexion (10a) qui entoure le premier connecteur (11a) de moteur régionalement et vers l'extérieur,
- dans lequel le premier connecteur (11a) de moteur et la première partie de connexion (10a) sont solidarisés l'un à l'autre,
- dans lequel la première unité connecteur (4a) est connectée de manière électriquement conductrice au moteur électrique (3) via le premier connecteur (11a) de moteur,
- dans lequel le dispositif moteur (2) comprend une seconde unité connecteur (4b) présentant un second connecteur (11b) de moteur et présentant une seconde partie de connexion (10b),
- dans lequel une connexion électroconductrice peut être établie et libérée directement entre le premier connecteur (11a) de moteur et le second connecteur (11b) de moteur,
- dans lequel entre la première partie de connexion (10a) et la seconde partie de connexion (10b), une connexion ajustée transversalement à l'arbre rotatif (RA) peut être établie et libérée, et
- dans lequel, lorsque la connexion ajustée entre les parties de connexion (10a, 10b) est établie et libérée, la connexion électroconductrice entre les connecteurs (11a, 11b) de moteur peut être établie et libérée, **caractérisé en ce que** la première unité connecteur (4a) est solidarisée au moteur électrique (3).

2. Dispositif moteur selon la revendication 1,
**caractérisé**
- **en ce que** le premier connecteur (11a) de moteur et/ou la première partie de connexion (10a) sont solidarisés au moteur électrique (3) ; et/ou
- **en ce que** le second connecteur (11b) de moteur et/ou la seconde partie de connexion (10b) sont solidarisés l'un à l'autre dans la seconde unité connecteur (4b).

3. Dispositif moteur selon la revendication 1 ou 2,
**caractérisé**
- **en ce que** la seconde unité connecteur (4b) est conçue pour être solidarisée à une patte arrière (7) du vélo électrique (1) de préférence par un support (12), et/ou
- **en ce que** le moteur électrique (3) est conçu pour être solidarisé à une roue arrière (6) du vélo électrique (1).

4. Dispositif moteur selon l'une quelconque des revendications précédentes,
**caractérisé**
- **en ce que** le dispositif moteur (2) contient une unité d'ajustement (14) avec un premier élément d'ajustement (15a) et avec un second élément d'ajustement (15b),
- **en ce que** le premier élément d'ajustement (15a) est formé sur la première partie de connexion (10a) et le second élément d'ajustement (15b) est formé sur la seconde partie de connexion (10b), et
- **en ce que** le premier ou le second élément d'ajustement (15a, 15b) peut être inséré dans le second ou premier élément d'ajustement (15b, 15a) transversalement à l'arbre rotatif (RA) et ainsi la connexion d'ajustement entre les parties de connexion (10a, 10b) peut être établie.

5. Dispositif moteur selon la revendication 4,
**caractérisé**
- **en ce que** le premier élément d'ajustement (15a) est formé de deux premiers rails de guidage (16a) qui sont espacés l'un de l'autre et alignés transversalement à l'arbre rotatif (RA),
- **en ce que** le second élément d'ajustement (15b) est formé de deux seconds rails de guidage (16b) qui sont espacés l'un de l'autre et alignés transversalement à l'arbre rotatif (RA),
- **en ce que** les premiers rails de guidage (16a) et les seconds rails de guidage (16b) sont formés de manière mutuellement complémentaire, et
- **en ce que** les premiers rails de guidage (16a) et les seconds rails de guidage (16b) peuvent être déplacés les uns dans les autres transversalement à l'axe de rotation (RA) et peuvent être connectés à demeure les uns aux autres parallèlement à l'arbre rotatif (RA).

6. Dispositif moteur selon la revendication 5,
**caractérisé**
**en ce que** les deux premiers rails de guidage (16a) et les deux seconds rails de guidage (16b) sont chacun alignés de manière non parallèle les uns aux autres et se rapprochent radialement vers l'intérieur en direction de l'arbre rotatif (RA).

7. Dispositif moteur selon l'une quelconque des revendications précédentes,
**caractérisé**
**en ce que** la seconde unité connecteur (4b) contient un support (12) qui entoure la seconde partie de connexion (10b) et le second connecteur (11b) de moteur au moins dans des régions situées vers le moteur électrique (3).

8. Dispositif moteur selon la revendication 7,
**caractérisé**
**en ce que** la seconde partie de connexion (10b) est formée sur le support (12) ou est connectée fermement au support (12) par complémentarité de forme et/ou ajustement forcé et/ou de manière liée au matériau.

9. Dispositif moteur selon la revendication 7 ou 8,
**caractérisé**
**en ce que** le second connecteur (11b) de moteur est connecté fermement au support (12) par complémentarité de forme et/ou ajustement forcé et/ou de manière liée au matériau.

10. Dispositif moteur selon l'une quelconque des revendications précédentes,
**caractérisé**
**en ce que** le dispositif moteur (2) contient un axe traversant, l'axe traversant définissant l'arbre rotatif (RA) du moteur électrique (3) et s'étendant à travers le moteur électrique (3) et la seconde unité connecteur (4b).

11. Dispositif moteur selon l'une quelconque des revendications précédentes,
**caractérisé**
- **en ce que** la seconde unité connecteur (4b) contient un second connecteur (9b) de batterie pour connecter la seconde unité connecteur (4b) à un premier connecteur (9a) de batterie d'une batterie (5) du vélo électrique (1), et
- **en ce que** le second connecteur (9b) de batterie est connecté de manière électriquement conductrice au second connecteur (11b) de moteur via un câble.

12. Agencement d'unités connecteurs avec le dispositif moteur (2) selon l'une des revendications précédentes présentant la première unité connecteur (4a) et la seconde unité connecteur (4b) formées de telle manière,
- qu'une connexion ajustée peut être établie et libérée transversalement à l'arbre rotatif (RA) entre la seconde unité connecteur (4b) et la première unité connecteur (4a) pour le moteur électrique (3), et
- que, lorsque la connexion ajustée est produite et libérée, une connexion électroconductrice peut être établie et libérée entre la seconde unité connecteur (4b) et la première unité connecteur (4a) pour le moteur électrique (3).

13. Vélo électrique (1),
- dans lequel le vélo électrique (1) comprend le dispositif moteur (2) selon l'une quelconque des revendications 1 à 11,
- dans lequel le vélo électrique (1) comprend une roue arrière (6), une patte arrière (7) supportant la roue arrière (6) et une batterie (5),
- dans lequel le moteur électrique (3) avec la première unité connecteur (4a) est fixé à la roue arrière (6) et la seconde unité connecteur (4b) est fixée à la patte arrière (7), et
- dans lequel le moteur électrique (3) est connecté de manière électriquement conductrice à la batterie (5) via la seconde unité connecteur (4b).

14. Vélo électrique selon la revendication 13,
**caractérisé**
- **en ce que** la seconde unité de connexion (4b) contient un support (12) qui entoure ou entoure partiellement la seconde partie de connexion (10b) et le second connecteur (11b) de moteur au moins dans des régions vers le moteur électrique (3), et
- **en ce que** le support (12) est solidarisé à, ou fait partie intégrante de, la patte arrière (7).

15. Vélo électrique selon la revendication 14,
**caractérisé**
**en ce que** la patte arrière (7) fait partie intégrante d'un cadre du vélo électrique (1).
